# EUROPEAN PATENT APPLICATION

(11) **EP 4 848 646 A1**
(43) Date of publication of application: **02.12.2026**
(21) Application number: 26175017.8
(22) Date of filing: 28.04.2026
(51) Int. Cl.: H04L 5/00, H04W 72/232, H04L 1/1812, H04L 1/1829

(54) **UPLINK CONTROL INFORMATION REPORTING TECHNIQUES**

(30) Priority: 02.05.2025 US 202563798968 P
(71) Applicant: Apple Inc., Cupertino, CA 95014 (US)
(72) Inventor: FAKOORIAN, Seyed Ali Akbar, San Diego (US); SUN, Haitong, Saratoga (US); CHEN, Wanshi, San Diego (US); ZENG, Wei, Saratoga (US)
(74) Representative: COPA Copenhagen Patents

(57) **Abstract**

The present disclosure generally relates to uplink control information (UCI) reporting without physical uplink control channel (PUCCH) resources. In some implementations, a user equipment (UE) receives control signaling that configures one or more parameters for UCI reporting on physical uplink shared channel (PUSCH) resources. The UE can determine a mapping between at least one downlink component carrier (CC) and at least one uplink CC according to the one or more parameters configured for UCI reporting on PUSCH resources. Accordingly, the UE may transmit UCI via one or more PUSCH resources associated with the at least one uplink CC based at least on the determined mapping.

## Description

### TECHNICAL FIELD

The present disclosure relates generally to wireless communication, and more specifically to uplink control information (UCI) reporting techniques.

### BACKGROUND

Wireless communication networks provide integrated communication platforms and telecommunication services to wireless user devices. Example telecommunication services include telephony, data (e.g., voice, audio, video), messaging, and/or other services. The wireless communication networks have wireless access nodes that exchange wireless signals with the wireless user devices using one or more wireless network protocols, such as protocols described in various telecommunication standards promulgated by the European Telecommunications Standards Institute (ETSI) Third Generation Partnership Project (3GPP). The wireless communication networks facilitate mobile broadband service using technologies such as orthogonal frequency-division multiple access (OFDMA), multiple input multiple output (MIMO), advanced channel coding, massive MIMO, beamforming, and/or other features.

### SUMMARY

One aspect of the present disclosure relates to a method including: receiving control signaling that configures one or more parameters for uplink control information (UCI) reporting on physical uplink shared channel (PUSCH) resources; determining a mapping between at least one downlink component carrier (CC) and at least one uplink CC according to the one or more parameters configured for UCI reporting on PUSCH resources; and transmitting UCI via one or more PUSCH resources associated with the at least one uplink CC based on the determined mapping.

In some implementations, the UCI includes at least one of a periodic channel state information (P-CSI) report, an aperiodic CSI (A-CSI) report, an event-triggered CSI report, hybrid automatic repeat request (HARQ) acknowledgement (ACK) feedback, or a scheduling request (SR).

In some implementations, the control signaling configures event-triggered CSI reporting on the one or more PUSCH resources.

In some implementations, the method further includes transmitting capability signaling that indicates at least one of (i) a number of uplink CCs that can be active per slot for P-CSI reporting on PUSCH resources, (ii) a maximum number of active uplink CCs with P-CSI reporting on PUSCH resources, or (iii) a number of downlink CCs that can be measured and reported on a single uplink CC.

In some implementations, the capability signaling indicates that more than one downlink CC can be measured and reported on a single uplink CC.

In some implementations, the control signaling configures a set of *CSI-ReportConfigId* values, each value associated with a different downlink CC.

In some implementations, each *CSI-ReportConfigld* value is associated with at most one active periodic CSI report.

In some implementations, the control signaling indicates a configured grant (CG) PUSCH resource to use for P-CSI reporting.

In some implementations, an identifier or configuration of the CG PUSCH resource is provided by at least one of a *CSI-MeasConfig* field of a *ServingCellConfig* information element (IE), a *CSI-ReportConfig* subfield within the *CSI-MeasConfig* field, or an *uplinkConfig* field within the *ServingCellConfig* IE.

In some implementations, the one or more parameters include a list of CG PUSCH identifiers or configurations for P-CSI reporting configured per serving cell.

In some implementations, a respective list of CG PUSCH identifiers or configurations is provided for each uplink bandwidth part (BWP).

In some implementations, a single CG PUSCH resource is configured per serving cell for a particular uplink BWP, and where the CG PUSCH resource is activated when the particular uplink BWP is active.

In some implementations, the method further includes multiplexing accumulated HARQ-ACK bits on the one or more PUSCH resources in accordance with the control signaling.

In some implementations, the control signaling includes downlink control information (DCI) or radio resource control (RRC) signaling.

In some implementations, the accumulated HARQ-ACK bits are multiplexed with uplink data.

In some implementations, determining the mapping includes receiving, via the control signaling, a mapping between one downlink CC and one uplink CC, a mapping between more than one downlink CC and one uplink CC, a mapping between one downlink CC and more than one uplink CC, or a mapping between more than one downlink CC and more than one uplink CC.

In some implementations, HARQ-ACK feedback is not reported for a physical downlink shared channel (PDSCH) on a downlink CC that is mapped to more than one uplink CC.

In some implementations, HARQ-ACK feedback is reported for a PDSCH scheduled on a downlink CC that is mapped to more than one uplink CC.

In some implementations, the control signaling includes an RRC message, a medium access control (MAC) control element (CE), or DCI that indicates an association between downlink CCs and uplink CCs.

In some implementations, a field in the DCI indicates that a PUSCH transmission carries HARQ-ACK feedback for one or more of the uplink CCs.

In some implementations, the DCI schedules the PUSCH transmission with or without uplink data.

In some implementations, the DCI schedules a PDSCH transmission on a downlink CC.

In some implementations, the PUSCH transmission is scheduled on an uplink CC associated with the downlink CC on which the PDSCH transmission is received.

In some implementations, the control signaling configures one or more PUSCH resources for UCI transmission without uplink data.

In some implementations, the method further includes: in response to determining that a flag in the DCI is set to one, multiplexing HARQ-ACK bits for all downlink HARQ processes on downlink CCs mapped to the uplink CCs on which the PUSCH transmission is scheduled.

In some implementations, the DCI includes a downlink assignment indicator (DAI) and a K1 offset value indicating a number of bits to be reported in an uplink slot.

In some implementations, the DAI is incremented across all downlink CCs corresponding to the uplink CCs on which the PUSCH transmission is scheduled.

In some implementations, the DCI indicates a PUSCH resource to use for transmission of HARQ-ACK feedback for a PDSCH transmission, and where the indicated PUSCH resource does not carry uplink data.

In some implementations, the control signaling configures one or more PUSCH resources per uplink CC to carry SRs without uplink data.

In some implementations, the one or more PUSCH resources do not overlap with PUSCH resources that carry uplink data across any uplink CC.

In some implementations, the method further includes multiplexing HARQ-ACK feedback with an SR on a common PUSCH resource when both the SR and the HARQ-ACK feedback are scheduled on the same uplink CC.

In some implementations, the method further includes configuring a cell-specific PUSCH resource per uplink CC to carry HARQ-ACK feedback for Msg4, where the cell-specific PUSCH resource is released when one or more UE-specific PUSCH resources are configured.

In some implementations, the cell-specific PUSCH resource does not overlap with the one or more UE-specific PUSCH resources.

In some implementations, the method further includes: identifying an overlap between multiple PUSCH transmissions scheduled on an uplink CC; and resolving the overlap by prioritizing dynamic grant (DG) PUSCH transmissions over CG PUSCH transmissions and prioritizing CG PUSCH transmissions over P-CSI reports.

In some implementations, PUSCH resources that are configured for UCI transmission on a particular uplink CC do not overlap with PUSCH resources carrying data scheduled by DCI.

In some implementations, one PUSCH transmission carrying CSI is allowed across all uplink CCs.

In some implementations, A-CSI reports with data are prioritized over A-CSI reports without data, and where A-CSI reports with or without data are prioritized over P-CSI reports, and where CSI transmissions associated with lower serving cell indexes are prioritized over CSI reports with higher serving cell indexes.

In some implementations, the method further includes concurrently transmitting overlapping PUSCH transmissions across different uplink CCs without multiplexing the UCI across the uplink CCs.

In some implementations, the method further includes determining a priority of a PUSCH resource based on at least one of (i) a priority of uplink data carried by the PUSCH resource or (ii) a priority of HARQ-ACK feedback carried by the PUSCH resource, where the priority of the HARQ-ACK feedback corresponds to the priority of the uplink data.

In some implementations, the method further includes dropping a PUSCH transmission with a lower priority when a sum of transmit powers across multiple serving cells exceeds a threshold.

In some implementations, the method further includes performing measurements of one or more resources in accordance with an event-driven CSI reporting configuration, where the one or more resources include a periodic or semi-persistent CSI reference signal (CSI-RS) resource or synchronization signal block (SSB).

In some implementations, the control signaling configures a timer and one or more thresholds for triggering event-driven CSI reports.

In some implementations, the timer is reset after transmission of an event-driven CSI report.

In some implementations, the method further includes transmitting a triggered event-driven CSI report in a MAC-CE that indicates which CSI quantities are included in the CSI report.

In some implementations, separate MAC-CE formats are configured for each CSI report quantity.

In some implementations, receiving the control signaling that configures the one or more parameters for UCI reporting on PUSCH resources includes receiving a network indication of the one or more parameters to use for overlap resolution and resource selection.

In some implementations, the control signaling further indicates a set of UCI types among overlapping channels that are expected to be multiplexed on the one or more PUSCH resources selected for transmission of the UCI.

Another aspect of the present disclosure relates to an apparatus including: one or more processors; and memory storing instructions that, when executed by the one or more processors, cause the apparatus to perform any of the foregoing operations.

Another aspect of the present disclosure relates to a baseband processor configured to perform any of the foregoing operations.

Another aspect of the present disclosure relates to a method including: transmitting control signaling that configures one or more parameters for UCI reporting on PUSCH resources; determining a mapping between at least one downlink CC and at least one uplink CC according to the one or more parameters configured for UCI reporting on PUSCH resources; and receiving UCI via one or more PUSCH resources associated with the at least one uplink CC based on the determined mapping.

In some implementations, the UCI includes at least one of a P-CSI report, an A-CSI report, an event-triggered CSI report, HARQ-ACK feedback, or a SR.

In some implementations, the control signaling configures event-triggered CSI reporting on the one or more PUSCH resources.

In some implementations, the method further includes receiving capability signaling that indicates at least one of (i) a number of uplink CCs that can be active per slot for P-CSI reporting on PUSCH resources, (ii) a maximum number of active uplink CCs with P-CSI reporting on PUSCH resources, or (iii) a number of downlink CCs that can be measured and reported on a single uplink CC.

In some implementations, the capability signaling indicates that more than one downlink CC can be measured and reported on a single uplink CC.

In some implementations, the control signaling configures a set of *CSI-ReportConfigId* values, each value associated with a different downlink CC.

In some implementations, each *CSI-ReportConfigId* value is associated with at most one active periodic CSI report.

In some implementations, the control signaling indicates a CG PUSCH resource to use for P-CSI reporting.

In some implementations, an identifier or configuration of the CG PUSCH resource is provided by at least one of a *CSI-MeasConfig* field of a *ServingCellConfig* IE, a *CSI-ReportConfig* subfield within the *CSI-MeasConfig* field, or an *uplinkConfig* field within the *ServingCellConfig* IE.

In some implementations, the one or more parameters include a list of CG PUSCH identifiers or configurations for P-CSI reporting configured per serving cell.

In some implementations, a respective list of CG PUSCH identifiers or configurations is provided for each uplink BWP.

In some implementations, a single CG PUSCH resource is configured per serving cell for a particular uplink BWP, and where the CG PUSCH resource is activated when the particular uplink BWP is active.

In some implementations, the method further includes receiving accumulated HARQ-ACK bits multiplexed on the one or more PUSCH resources in accordance with the control signaling.

In some implementations, the control signaling includes DCI or RRC signaling.

In some implementations, the accumulated HARQ-ACK bits are multiplexed with uplink data.

In some implementations, determining the mapping includes receiving, via the control signaling, a mapping between one downlink CC and one uplink CC, a mapping between more than one downlink CC and one uplink CC, a mapping between one downlink CC and more than one uplink CC, or a mapping between more than one downlink CC and more than one uplink CC.

In some implementations, HARQ-ACK feedback is not reported for a PDSCH on a downlink CC that is mapped to more than one uplink CC.

In some implementations, HARQ-ACK feedback is reported for a PDSCH scheduled on a downlink CC that is mapped to more than one uplink CC.

In some implementations, the control signaling includes an RRC message, a MAC-CE, or DCI that indicates an association between downlink CCs and uplink CCs.

In some implementations, a field in the DCI indicates that a PUSCH transmission carries HARQ-ACK feedback for one or more of the uplink CCs.

In some implementations, the DCI schedules the PUSCH transmission with or without uplink data.

In some implementations, the DCI schedules a PDSCH transmission on a downlink CC.

In some implementations, the PUSCH transmission is scheduled on an uplink CC associated with the downlink CC on which the PDSCH transmission is received.

In some implementations, the control signaling configures one or more PUSCH resources for UCI transmission without uplink data.

In some implementations, the DCI includes a DAI and a K1 offset value indicating a number of bits to be reported in an uplink slot.

In some implementations, the DAI is incremented across all downlink CCs corresponding to the uplink CCs on which the PUSCH transmission is scheduled.

In some implementations, the DCI indicates a PUSCH resource to use for transmission of HARQ-ACK feedback for a PDSCH transmission, and where the indicated PUSCH resource does not carry uplink data.

In some implementations, the control signaling configures one or more PUSCH resources per uplink CC to carry SRs without uplink data.

In some implementations, the one or more PUSCH resources do not overlap with PUSCH resources that carry uplink data across any uplink CC.

In some implementations, the method further includes configuring a cell-specific PUSCH resource per uplink CC to carry HARQ-ACK feedback for Msg4, where the cell-specific PUSCH resource is released when one or more UE-specific PUSCH resources are configured.

In some implementations, the cell-specific PUSCH resource does not overlap with the one or more UE-specific PUSCH resources. In some implementations, PUSCH resources that are configured for UCI transmission on a particular uplink CC do not overlap with PUSCH resources carrying data scheduled by DCI.

In some implementations, one PUSCH transmission carrying CSI is allowed across all uplink CCs.

In some implementations, A-CSI reports with data are prioritized over A-CSI reports without data, and where A-CSI reports with or without data are prioritized over P-CSI reports, and where CSI transmissions associated with lower serving cell indexes are prioritized over CSI reports with higher serving cell indexes.

In some implementations, the method further includes concurrently receiving overlapping PUSCH transmissions across different uplink CCs, where the UCI is not multiplexed across the uplink CCs.

In some implementations, the method further includes determining a priority of a PUSCH resource based on at least one of (i) a priority of uplink data carried by the PUSCH resource or (ii) a priority of HARQ-ACK feedback carried by the PUSCH resource, where the priority of the HARQ-ACK feedback corresponds to the priority of the uplink data.

In some implementations, the control signaling configures a timer and one or more thresholds for triggering event-driven CSI reports.

In some implementations, the timer is reset after transmission of an event-driven CSI report.

In some implementations, the method further includes receiving a triggered event-driven CSI report in a MAC-CE that indicates which CSI quantities are included in the CSI report.

In some implementations, separate MAC-CE formats are configured for each CSI report quantity.

In some implementations, transmitting the control signaling that configures the one or more parameters for UCI reporting on PUSCH resources includes transmitting a network indication of the one or more parameters to use for overlap resolution and resource selection.

In some implementations, the control signaling further indicates a set of UCI types among overlapping channels that are expected to be multiplexed on the one or more PUSCH resources selected for transmission of the UCI.

Another aspect of the present disclosure relates to an apparatus including: one or more processors; and memory storing instructions that, when executed by the one or more processors, cause the apparatus to perform any of the foregoing operations.

Another aspect of the present disclosure relates to a baseband processor configured to perform any of the foregoing operations.

The details of one or more embodiments of these systems and methods are set forth in the accompanying drawings and the description below. Other features, objects, and advantages of these systems and methods will be apparent from the description and drawings, and from the claims.

### BRIEF DESCRIPTION OF THE FIGURES

FIG. 1 illustrates an example wireless network, according to some implementations.
FIG. 2 illustrates an example resource diagram, according to some implementations.
FIG. 3 illustrates an example signaling diagram, according to some implementations.
FIG. 4 illustrates a flowchart of an example method for UCI transmission without PUCCH, according to some implementations.
FIG. 5 illustrates a flowchart of an example method for UCI reception without PUCCH, according to some implementations.
FIG. 6 illustrates an example UE, according to some implementations.
FIG. 7 illustrates an example access node, according to some implementations.

### DETAILED DESCRIPTION

In 3GPP fifth generation (5G) New Radio (NR) systems, uplink control information (UCI), such as channel state information (CSI), hybrid automatic repeat request (HARQ) acknowledgement (HARQ-ACK) feedback, and scheduling requests (SR), are carried on a physical uplink control channel (PUCCH). Determining which PUCCH resource to use and whether/how to multiplex that PUCCH with a physical uplink shared channel (PUSCH) is a multi-stage process that depends on factors such as UCI type, PUCCH resource overlap, PUSCH resource overlap, and other rules. For example, a user equipment (UE) may be configured to drop a CSI PUCCH transmission that overlaps with a CSI PUSCH transmission, multiplex a PUCCH HARQ-ACK transmission with an overlapping PUSCH transmission, or drop an SR PUCCH that overlaps with data PUSCH, etc.

In existing UCI transmission schemes, the process of selecting time-frequency resources (referred to as a container) for each UCI type can be somewhat complex. The UE typically considers multiple candidate PUCCH resources, applies type-specific multiplexing or dropping rules, compares against PUSCH occasions, and applies additional rules to select a final candidate. In some cases, the UE selects a UCI container based on a mapping between uplink component carriers (CCs) and downlink CCs. Because the network can dynamically associate downlink CCs with uplink CCs, the UE may inadvertently select an incorrect container if a dynamic indication from the network is missed. This can lead to signaling overhead, retransmissions, wasted power, and lower reliability.

The present disclosure describes techniques to simplify the UCI resource selection process by carrying all UCI on PUSCH occasions that may also carry uplink data. In some examples, periodic CSI (P-CSI) and event-triggered CSI reports are carried on configured grant PUSCH (CG-PUSCH) resources indicated by *CSI-MeasConfig* or *uplinkConfig.* The UE may signal, via radio resource control (RRC) capability information, how many uplink CCs can support P-CSI per slot and how many downlink CCs can be reported on each uplink CC. For HARQ-ACK, the network may explicitly indicate the PUSCH resource(s) on which the UE should multiplex accumulated ACK bits. This indication can be provided via downlink control information (DCI) or RRC signaling. For SR, the UE can use dedicated (e.g., special) PUSCH resources that are configured per cell, rather than a PUCCH. This can help resolve ambiguity on the UE side.

As an example, a UE configured with three downlink CCs mapped to one uplink CC may receive a CG-PUSCH configuration (in *CSI-MeasConfig*) that designates one or more uplink CCs and/or PUSCH occasions for periodic CSI reporting. When the periodic report is triggered, the UE only transmits on that particular PUSCH, without evaluating overlapping PUCCH resources or other PUSCH candidates. Likewise, if the network schedules a physical downlink shared channel (PDSCH) on CC2 and transmits uplink DCI with a "one-shot" flag in the same slot, the UE can multiplex all pending HARQ-ACK bits for CC2 onto the PUSCH indicated by that uplink DCI, without additional selection logic. Because each UCI container is explicitly signaled, the UE no longer has to perform complex overlap resolution. This reduces the chance of UE-network misalignment, lowers UE processing overhead, and simplifies the UCI transmission process.

Carrying UCI on PUSCH resources allows the network to reuse existing uplink shared channel mechanisms, which eliminates the need for a separate 3GPP sixth generation (6G) PUCCH design. Providing an explicit PUSCH indication also removes ambiguity and ensures the UE and network agree on the same resource, which can improve communication reliability. Reporting UCI on PUSCH resources allows the UE to leverage the high-throughput, flexible PUSCH framework of 6G, and eliminates the need for a separate 6G PUCCH framework. Additionally, UE capability signaling of supported CC mappings can help the network avoid unsupported multi-carrier reporting configurations, which can improve network robustness.

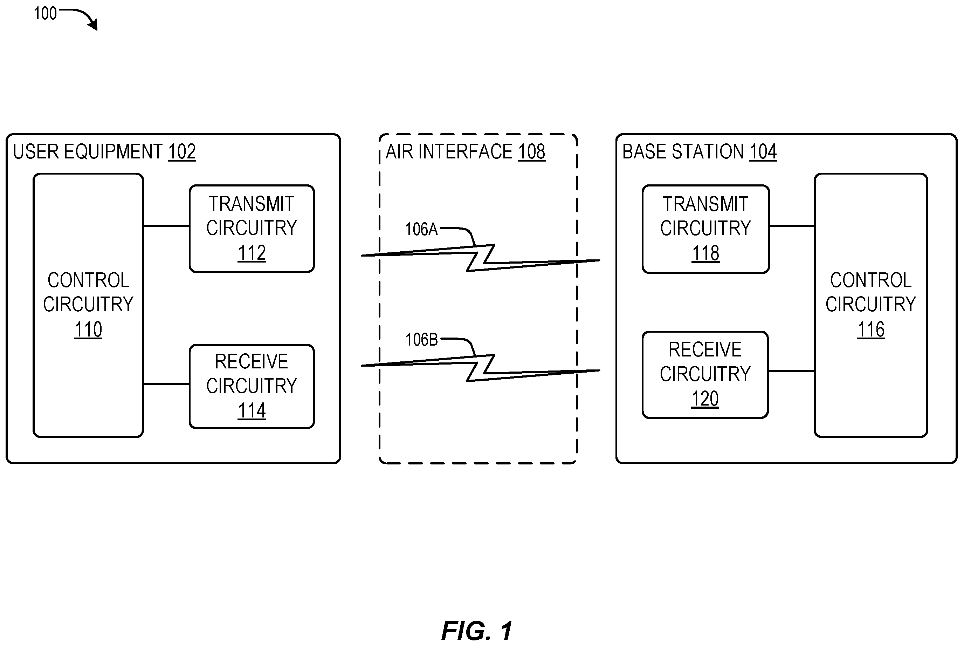

FIG. 1 illustrates an example wireless network 100, according to some implementations. The wireless network 100 includes a UE 102 and a base station 104, which are connected via one or more channels 106A, 106B across an air interface 108. The UE 102 and base station 104 communicate using a system that supports controls for managing the access of the UE 102 to a network via the base station 104.

In some implementations, the wireless network 100 is a standalone (SA) network, e.g., that incorporates Fifth Generation (5G) New Radio (NR). In some other implementations, the wireless network 100 is a non-standalone (NSA) network that incorporates Long Term Evolution (LTE) and 5G NR. In these implementations, the wireless network 100 may be an Evolved Universal Terrestrial Radio Access (E-UTRA)-NR Dual Connectivity (EN-DC) network, or an NR-EUTRA Dual Connectivity (NE-DC) network. Furthermore, wireless networks implementing one or more other types of communication standards are possible, including future 3GPP systems (e.g., Sixth Generation "6G"), Institute of Electrical and Electronics Engineers (IEEE) 802.11 technology, or the like. While aspects may be described herein using terminology commonly associated with 5G NR, aspects of the present disclosure can be applied to other systems, such as systems subsequent to 5G (e.g., 6G).

In the wireless network 100, the UE 102 and any other UE in the system may be, for example, any of a laptop computer, smartphone, tablet computer, machine-type device (such as smart meters or specialized devices for healthcare), intelligent transportation system, or any other wireless device. In network 100, the base station 104 provides the UE 102 network connectivity to a broader network (not shown). This UE 102 connectivity is provided via the air interface 108 in a base station service area provided by the base station 104. In some implementations, such a broader network may be a wide area network operated by a cellular network provider, or may be the Internet. Each base station service area associated with the base station 104 is supported by one or more antennas integrated with the base station 104. The service areas can be divided into a number of sectors associated with one or more particular antennas. Such sectors may be physically associated with one or more fixed antennas or may be assigned to a physical area with one or more tunable antennas or antenna settings adjustable in a beamforming process used to direct a signal to a particular sector.

The UE 102 includes control circuitry 110 coupled with transmit circuitry 112 and receive circuitry 114. The transmit circuitry 112 and receive circuitry 114 may each be coupled with one or more antennas. The control circuitry 110 may include application-specific circuitry, baseband circuitry, or any of various combinations thereof. The transmit circuitry 112 and receive circuitry 114 may be adapted to transmit and receive data, respectively, and may include radio frequency (RF) circuitry and/or front-end module (FEM) circuitry.

In various implementations, aspects of the transmit circuitry 112, receive circuitry 114, and/or control circuitry 110 may be integrated in various ways to implement the operations described herein. The control circuitry 110 may be adapted or configured to perform various operations, such as those described elsewhere in this disclosure related to a UE. For example, the control circuitry 110 can determine which PUSCH resources to use for transmission of UCI based on a reporting configuration provided by the base station 104.

The transmit circuitry 112 can perform various operations described herein. For example, the transmit circuitry 112 can transmit UCI via a set of PUSCH resources in accordance with the reporting configuration. Additionally, the transmit circuitry 112 may transmit using multiplexed uplink physical channels. The uplink physical channels can be multiplexed, e.g., according to time division multiplexing (TDM) or frequency division multiplexing (FDM), and in some implementations, along with carrier aggregation. The transmit circuitry 112 may be configured to receive block data from the control circuitry 110 for transmission on the air interface 108.

The receive circuitry 114 can perform various operations described herein. For example, the receive circuitry 114 can receive control signaling that configures one or more UCI reporting parameters. Additionally, the receive circuitry 114 may receive multiplexed downlink physical channels from the air interface 108 and relay the physical channels to the control circuitry 110. The downlink physical channels can be multiplexed, e.g., according to TDM or FDM, e.g., along with carrier aggregation. The transmit circuitry 112 and the receive circuitry 114 may transmit and receive, respectively, both control data and content data (e.g., messages, images, video) structured within data blocks that are carried by the physical channels.

FIG. 1 also illustrates the base station 104. In some implementations, the base station 104 may be a 5G radio access network (RAN), a next generation RAN, a E-UTRAN, a non-terrestrial cell, or a legacy RAN, such as a UTRAN. As used herein, the term "5G RAN" or the like may refer to the base station 104 that operates in an NR wireless network 100, and the term "E-UTRAN" or the like may refer to a base station 104 that operates in an LTE wireless network 100. The UE 102 utilizes connections (or channels) 106A, 106B, each of which includes a physical communications interface or layer.

The base station 104 circuitry may include control circuitry 116 coupled (directly or indirectly) with transmit circuitry 118 and/or receive circuitry 120. The transmit circuitry 118 and receive circuitry 120 may each be coupled (directly or indirectly) with one or more antennas that may be used to enable communications via the air interface 108. The transmit circuitry 118 and receive circuitry 120 may be adapted to transmit and receive data, respectively, addressed to any UE connected to the base station 104. The receive circuitry 120 may receive uplink physical channel transmissions from one or more UEs, including the UE 102.

In FIG. 1, the one or more channels 106A, 106B are illustrated as an air interface to enable communicative coupling, and may be consistent with cellular communications protocols, such as an LTE protocol, Advanced LTE (LTE-A) protocol, LTE-based access to unlicensed spectrum (LTE-U), NR protocol, NR-based access to unlicensed spectrum (NR-U) protocol, and/or any other communications protocol(s). In some implementations, the UE 102 may directly exchange communication data via a ProSe interface. The ProSe interface may alternatively be referred to as a sidelink (SL) interface and may include one or more logical channels, including but not limited to a physical sidelink control channel (PSCCH), a physical sidelink discovery channel (PSDCH), or a physical sidelink broadcast channel (PSBCH).

In 5G, for CSI, there are two UCI reporting procedures on PUCCH, e.g., persistent and semi-persistent CSI on PUCCH. If PUCCH resources overlap in time, the multiplexing/dropping procedure to resolve overlap can be complicated. Likewise, there are two reports on PUSCH (semi-persistent and aperiodic). If a PUCCH with CSI overlaps with a PUSCH with CSI, the PUCCH with CSI is dropped. If two PUSCHs with CSI overlap, the semi-persistent PUSCH is dropped. For HARQ-ACK, the PUCCH resource is dynamically indicated (e.g., for DG-PDSCH and SPS release) or RRC indicated (e.g., for SPS-PDSCH). If PUCCH overlaps with PUSCH, the UE is typically supposed to perform multiplexing on PUSCH. An SR can be multiplexed or dropped on PUCCH depending on the contents of the PUCCH, the format of PUCCH, and whether the SR is a positive or negative SR. If a PUCCH with SR overlaps with a PUSCH without data, the PUSCH is dropped. If a PUCCH with an SR overlaps with a PUSCH with data, the SR is dropped.

For CSI reporting without PUCCH, the techniques disclosed herecan support aperiodic CSI (A-CSI) on PUSCH and at least one of P-CSI on PUSCH or semi-persistent CSI (SP-CSI) on PUSCH. P-CSI on PUSCH does not exist in 5G, and there is no mechanism to support event-triggered CSI on PUSCH in 4G/5G. To support P-CSI on PUSCH, a serving cell with uplink is indicated with a P-CSI report on PUSCH, e.g., through *CSI-MeasConfig* in *CSI-ReportConfig,* where *reportConfigType* is set to *periodicOnPUSCH.*

The UE 102 can indicate, as part of UE capability information, a number of uplink CCs that can be active per slot for P-CSI on PUSCH. By default, this number can be set to 1. Additionally, or alternatively, the UE 102 can report the maximum number of active uplink CCs with P-CSI on PUSCH, regardless of whether P-CSI PUSCHs overlap in time. The UE can also indicate, as part of UE capability information, the number of downlink CCs for which P-CSI can be measured and reported on a single uplink CC. If the value is more than 1, the UE can be configured with multiple *CSI-ReportConfigIds,* where the *CSI-ReportConfig* corresponding to each ID is associated with one downlink CC. The UE will not expect any *CSI-ReportConfigId* to be associated with more than one active P-CSI report on PUSCH.

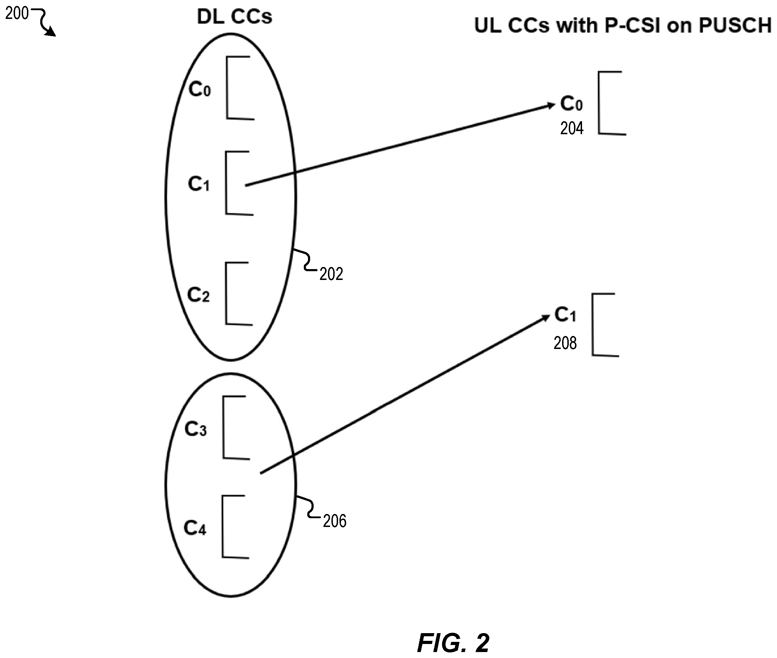

For an uplink serving cell, when the UE 102 is configured with P-CSI on PUSCH, the UE may be configured with a CG-PUSCH to report P-CSI report on PUSCH. In some implementations, the configuration of CG-PUSCH, or the ID of the CG-PUSCH configuration that carries P-CSI on PUSCH, is provided to the UE 102 via *CSI-MeasConfig* in *ServingCellConfig.* This approach is useful if there is a (>1)-to-1 mapping between downlink CCs to be measured and an uplink CC to report P-CSI CG-PUSCH (as shown in FIG. 2). If there is a 1-to-1 mapping between downlink CCs to be measured and uplink CCs to report P-CSI CG-PUSCH, the configuration may be provided to the UE 102 via *CSI-ReportConfig* in the *CSI-MeasConfig* IE. Alternatively, the configuration can be signaled via *uplinkConfig* in *ServingCellConfig.*

A list of CG-PUSCH IDs or configurations for P-CSI report may be configured per serving cell, one per uplink BWP. For each active uplink BWP, the UE 102 knows which CG-PUSCH is used for P-CSI report on PUSCH. Alternatively, one CG-PUSCH for P-CSI reporting may be configured per serving cell for one of the uplink BWPs. P-CSI on PUSCH can be activated when that specific uplink BWP is active. The content of P-CSI on PUSCH may be similar to the content of SP-CSI on PUSCH in 5G. However, in 5G, the content of CSI on PUSCH may be different from CSI on PUCCH.

There are different procedures for HARQ-ACK codebook construction, but all procedures follow the same rule where the resource to report HARQ-ACK is initially a PUCCH resource. If the resultant PUCCH resource (after multiplexing with other PUCCH resources) overlaps with a PUSCH, the associated UCI can be multiplexed on PUSCH. For HARQ-ACK reporting without PUCCH, the UE 102 may be configured to multiplex accumulated HARQ-ACK bits over an indicated PUSCH resource. This indication can be provided via uplink DCI or an RRC indication. The indicated "PUSCH" container may or may not carry data.

For the association between downlink CC(s) and uplink CC(s) that carry HARQ-ACK feedback for the corresponding downlink CC(s), there may be a 1 (or >1)-to-1 mapping between downlink CC(s) and uplink CC(s). The UE 102 may be unable to report HARQ-ACK for a PDSCH scheduled on more than one uplink CC. Alternatively, one or more downlink CC(s) can be mapped to more than one uplink CC. In such cases, the UE 102 may be configured to report HARQ-ACK for a PDSCH scheduled on a downlink CC on more than one uplink CC. With this approach, HARQ-ACK feedback from overlapping PUSCHs across different uplink CCs may be multiplexed when a HARQ process is reported simultaneously over more than one uplink CC.

In some implementations, the association between downlink CC(s) and uplink CC(s) can be RRC configured or indicated by a MAC-CE. The association can also be indicated by DCI, in which case a field in DCI may indicate that downlink scheduling is associated with specific uplink CC(s). If the association is configured via uplink DCI, a field in DCI can be used to indicate which downlink CC(s) this PUSCH is carrying HARQ-ACK for. The PUSCH resource indication to carry HARQ-ACK feedback can be provided via uplink DCI, which schedules PUSCH with or without data. Alternatively, the indication can be provided by downlink DCI that schedules PDSCH(s). In this case, PUSCH would be sent on the uplink CC associated with the downlink CC on which the PDSCH is scheduled. The indicated PUSCH may not carry data in some cases. For example, the UE 102 can be RRC configured with one or more special PUSCHs on that uplink CC, and the downlink DCI can indicate which one is selected.

For HARQ-ACK codebook construction and reporting on the indicated uplink CC, the UE 102 can use a Type-3 codebook variant. With this codebook, the uplink DCI can have a one-shot flag. When the flag is set to 1, the HARQ-ACK bits for all downlink HARQ process numbers on the downlink CCs corresponding to this uplink CC can be multiplexed on the scheduled PUSCH. This approach can be applied to all downlink messages for which the UE 102 is supposed to provide HARQ-ACK, including SPS-PDSCH, DG-PDSCH, SPS release, etc.

Alternatively, the UE 102 may use a Type-2 codebook variant. With this codebook, each downlink DCI may have a downlink assignment indicator (DAI) and K1 offset value indicating the number of bits to be reported in a given uplink slot, but no indication of PUSCH to carry HARQ-ACK. The downlink DAI can be incremented over all downlink CCs corresponding to that uplink CC. The uplink DCI scheduling PUSCH on that slot may have a total DAI value. In some implementations, each downlink DCI also indicates which PUSCH to carry HARQ-ACK. The indicated PUSCH, which may not carry data, is a configured resource over that uplink CC. The Type-3 codebook variant can be used for downlink scheduling without a DCI (like SPS-PDSCH) or a downlink scheduling not corresponding to a DCI with a DAI value.

For SR transmission, the UE 102 can be RRC configured with special PUSCHs that do not carry data. These special PUSCH resources will not overlap with regular PUSCH resources (with or without data) across any uplink CCs. SR resources with a positive SR and HARQ-ACK resources can be multiplexed. In some implementations, the UE 102 is configured with cell-specific resources for an uplink CC to carry HARQ-ACK. This cell-specific resource can be a Msg4 HARQ-ACK transmission, for example. The cell-specific resources may be released when the UE 102 is configured with UE-specific resources. The UE 102 may not expect the cell-specific resource to overlap with UE-specific resources.

Supporting UCI without PUCCH allows simultaneous transmission of different PUSCHs across different CCs without complicated multiplexing/prioritization rules. The following approach can be used for multiplexing and/or prioritization of different PUSCHs with or without UCI. First, the UE 102 resolves overlap of different PUSCHs within a CC, where DG-PUSCH (with or without UCI) is prioritized over CG-PUSCH (with or without UCI), which is prioritized over P-CSI on PUSCH. Within a given uplink CC, the UE 102 may not expect the indicated PUSCH resource to overlap with a PUSCH carrying data scheduled by uplink DCI (with or without HARQ-ACK). Alternatively, a special PUSCH with HARQ-ACK can be multiplexed with a PUSCH carrying data. However, this approach would be similar to PUCCH overlapping with PUSCH in 5G.

In turn, the UE 102 may resolve overlap of different PUSCHs across different CCs. Only one CSI on PUSCH across all CCs is allowed at any given time. This applies to: A-CSI with data, which takes precedence over A-CSI without data; A-CSI (with or without data), which takes precedence over P-CSI on PUSCH; and CSI on a smaller serving cell index, which takes precedence over CSI on a larger serving cell index. In some implementations, the UE 102 does not multiplex PUSCH with HARQ-ACK and/or CSI on different CCs. Instead, the UE 102 may concurrently transmit remaining overlapping PUSCHs across different CCs, subject to UE capability and power prioritization. The foregoing resolution procedure is applicable to the same and different PHY priority levels.

For different PHY priority orders, the priority of a PUSCH can be determined by the priority of the data carried by that PUSCH or the priority of the HARQ-ACK feedback carried by that PUSCH. In some examples, the UE 102 does not expect the priority of HARQ-ACK to differ from the priority of PUSCH data. When determining a total transmit power across different serving cells results in a total power that exceeds the UE's power class, a lower priority PUSCH (as determined above) may be dropped.

For event-triggered CSI reporting, the measurement resource can be a periodic or semi-persistent CSI reference signal (CSI-RS) or synchronization signal block (SSB). For CSI report quantity, as for Layer 1 (L1) reference signal received power (L1-RSRP), the UE 102 may be configured with a timer that is reset when a CSI report is triggered and sent. One or more thresholds may be defined for triggering the report. A report may be triggered if the timer is not running and the measured quantity goes beyond (or below) the configured threshold(s). A triggered report can be sent in a MAC-CE. In such cases, the MAC-CE can indicate which quantities are included in the report. Alternatively, separate MAC-CEs may be configured for each report quantity.

FIG. 2 illustrates an example resource diagram 200, according to some implementations. The resource diagram 200 shows how P-CSI reporting can be implemented using PUSCH resources when UCI reporting is performed without a PUCCH, as described herein. In FIG. 2, two distinct sets of downlink CCs are shown: the first set of downlink CCs 202 includes carriers C0, C1, and C2, while the second set of downlink CCs 206 includes carriers C3 and C4. Each group of downlink CCs is mapped to a corresponding uplink CC that carries P-CSI on a PUSCH. The resource diagram 200 illustrates a mapping between two or more downlink CCs and a single CC.

The first set of downlink CCs 202 represent, for example, a serving cell configuration in which three downlink CCs are measured and reported together. UE capability signaling may indicate that up to three downlink CCs can be active for periodic CSI reporting on a single uplink CC. In some implementations, a CG-PUSCH resource associated with uplink CC 204 is designated to carry periodic CSI for downlink carriers C0, C1, and C2. This direct association eliminates the need for the UE 102 to evaluate multiple PUCCH candidates or resolve overlaps with other PUSCH occasions.

The second set of downlink CCs 206 may be configured for periodic CSI reporting on a different uplink CC. In some implementations, a CG-PUSCH resource on uplink CC 208 is configured to carry periodic CSI for downlink carriers C3 and C4. This association may be configured by a *CSI-MeasConfig* parameter in the *ServingCellConfig* RRC information element (IE). Alternatively, if a one-to-one mapping is used, the *CSI-ReportConfig* parameter of *CSI-MeasConfig* can be used to indicate the PUSCH configuration.

Designating uplink CC 204 and uplink CC 208 as containers for P-CSI reduces the complexity of UCI reporting without PUCCH. Instead of selecting among multiple PUCCH resources and multiplexing according to legacy rules, the UE 102 can simply transmit UCI on the designated CG-PUSCH resources in the active uplink bandwidth part (BWP). This reduces ambiguity and processing overhead by leveraging UE capability information and explicitly configuring CG-PUSCH identifiers (IDs) per serving cell and/or per uplink BWP.

The network can avoid unsupported multi-carrier reporting configurations by adhering to the UE's reported maximum number of active downlink CCs per uplink CC. Because the mapping between downlink CCs and uplink CCs is fixed (e.g., three downlink CCs to uplink CC 204 and two downlink CCs to uplink CC 208), the UE 102 does not have to perform complex overlap resolution. Rather, the UE 102 can reliably transmit periodic CSI reports on the designated PUSCH resource(s) without evaluating alternative UCI containers, which can improve reliability and reduce signaling overhead.

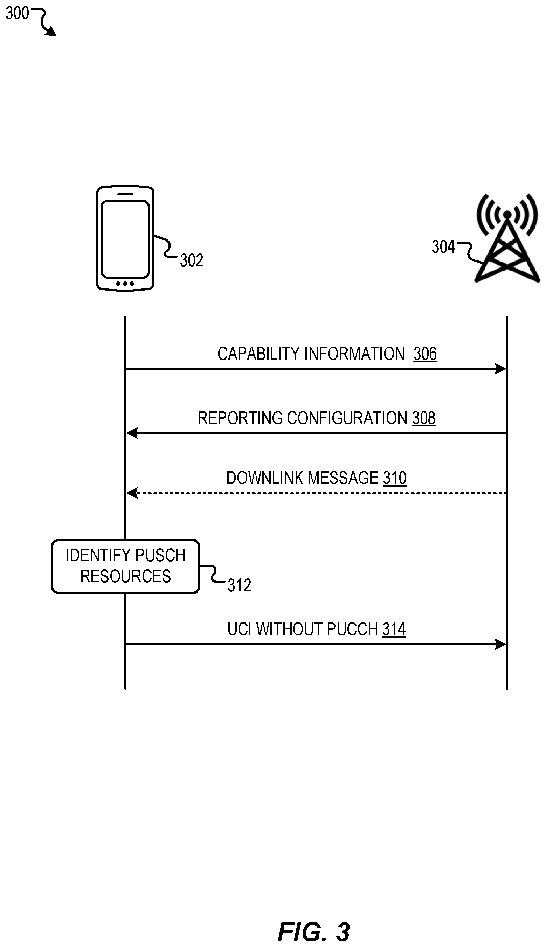

FIG. 3 illustrates an example signaling diagram 300, according to some implementations. The signaling diagram 300 depicts an exchange of messages between a UE 302 (such as the UE 102 of FIG. 1) and a base station 304 (such as the base station 104 of FIG. 1) in the context of UCI reporting without PUCCH. In the signaling diagram 300, the UE 302 advertises its UCI reporting capabilities, receives a reporting configuration from the base station 304, processes any downlink indications, identifies a PUSCH container for UCI reporting, and transmits UCI in the designated PUSCH occasion.

At 306, the UE 302 transmits capability information to the base station 304. In some examples, the capability information indicates the number of uplink CCs the UE 302 can support per slot for periodic CSI on PUSCH, the maximum number of active uplink CCs that can overlap, and/or the number of downlink CCs that can be measured and reported on a single uplink CC. Providing these RRC capability parameters ensures that the base station 304 will only configure multi-carrier reporting parameters that can be reliably handled by the UE 302.

At 308, the base station 304 provides a UCI reporting configuration to the UE 302. In some implementations, the UCI reporting configuration is carried within a *CSI-MeasConfig* or *uplinkConfig* IE. The UCI reporting configuration can indicate, for example, that periodic CSI reports are to be sent via a CG-PUSCH resource. Additionally, or alternatively, the UCI reporting configuration may list the CG-PUSCH configuration IDs associated with the active uplink BWP of each serving cell.

At 310, the base station 304 optionally sends a downlink message, such as a PDSCH transmission or a DCI that indicates additional resources/flags for UCI reporting. In some examples, this downlink message carries a "one-shot" flag to indicate a HARQ-ACK codebook for a scheduled PUSCH. Additionally, or alternatively, the downlink message can reaffirm which CG-PUSCH occasion is to carry the next UCI report. This eliminates the need for the UE 302 to perform complex PUCCH overlap resolution.

At 312, the UE 302 identifies uplink resources, such as PUSCH resources, to use for UCI transmission. In some implementations, this involves matching the received *CSI-ReportConfigIds* to the configured CG-PUSCH IDs for the active uplink BWP, and mapping each downlink CC to its designated uplink CC and/or PUSCH container. If the downlink message (at 310) includes a DCI-based indicator for HARQ-ACK, the UE 302 may also determine which PUSCH resource is to carry accumulated ACK bits.

At 314, the UE 302 transmits UCI to the base station 304 via the identified uplink resources. the UCI may include periodic CSI, event-triggered CSI, HARQ-ACK feedback, or an SR. The UCI can be multiplexed or sent on separate CG-PUSCH occasions, as described herein. Because the UE 302 already knows which PUSCH container to use, the UE 302 can simply transmit the UCI via the designated PUSCH container without further selection logic.

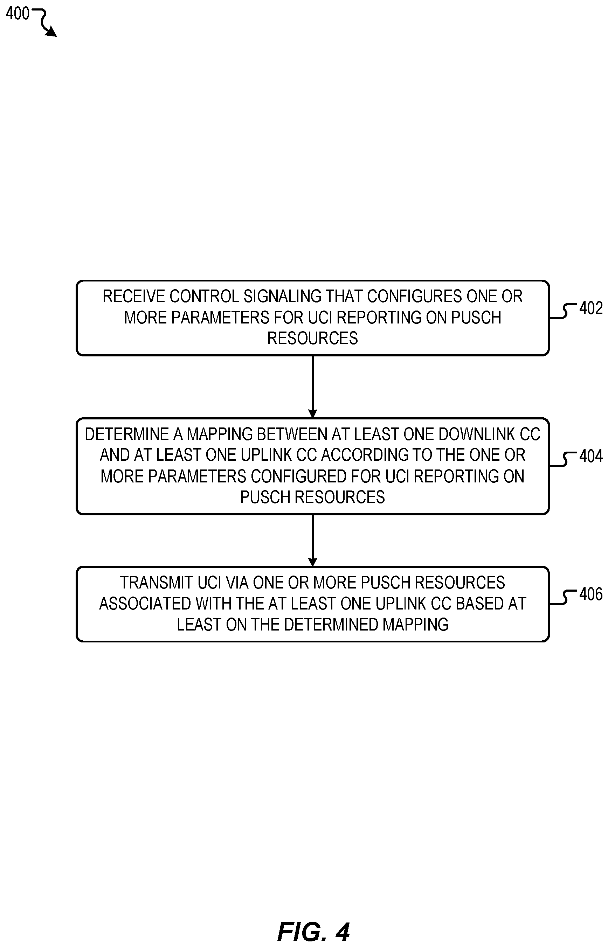

FIG. 4 illustrates a flowchart of an example method 400 for UCI transmission without PUCCH, according to some implementations. For clarity of presentation, the method 400 is described in the context of the preceding figures. For example, the method 400 can be performed by a UE, such as the UE 102 of FIG. 1. The method 400 can also be performed by any suitable system, environment, software, hardware, or combination thereof. In some implementations, operations of the method 400 can be run in parallel, in combination, in loops, or in any order. The example method 400 shown in FIG. 4 can be modified or reconfigured to include additional, fewer, or different steps (not shown in FIG. 4), which can be performed in the order shown or in a different order.

At 402, the UE receives control signaling that configures one or more parameters for UCI reporting on PUSCH resources.

At 404, the UE determines a mapping between at least one downlink CC and at least one uplink CC according to the one or more parameters configured for UCI reporting on PUSCH resources.

At 406, the UE transmits UCI via one or more PUSCH resources associated with the at least one uplink CC based at least on the determined mapping.

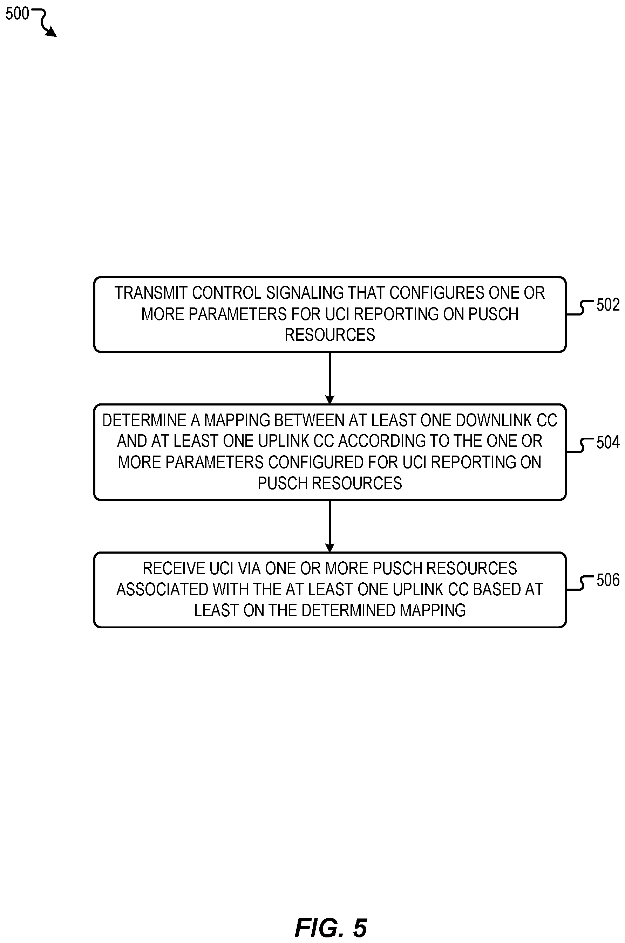

FIG. 5 illustrates a flowchart of an example method 500 for UCI reception without PUCCH, according to some implementations. For clarity of presentation, the method 500 is described in the context of the preceding figures. For example, the method 500 can be performed by an access node, such as the base station 104 of FIG. 1. The method 500 can also be performed by any suitable system, environment, software, hardware, or combination thereof. In some implementations, operations of the method 500 can be run in parallel, in combination, in loops, or in any order. The example method 500 shown in FIG. 5 can be modified or reconfigured to include additional, fewer, or different steps (not shown in FIG. 5), which can be performed in the order shown or in a different order.

At 502, the access node transmits control signaling that configures one or more parameters for UCI reporting on PUSCH resources.

At 504, the access node determines a mapping between at least one downlink CC and at least one uplink CC according to the one or more parameters configured for UCI reporting on PUSCH resources.

At 506, the access node receives UCI via one or more PUSCH resources associated with the at least one uplink CC based at least on the determined mapping.

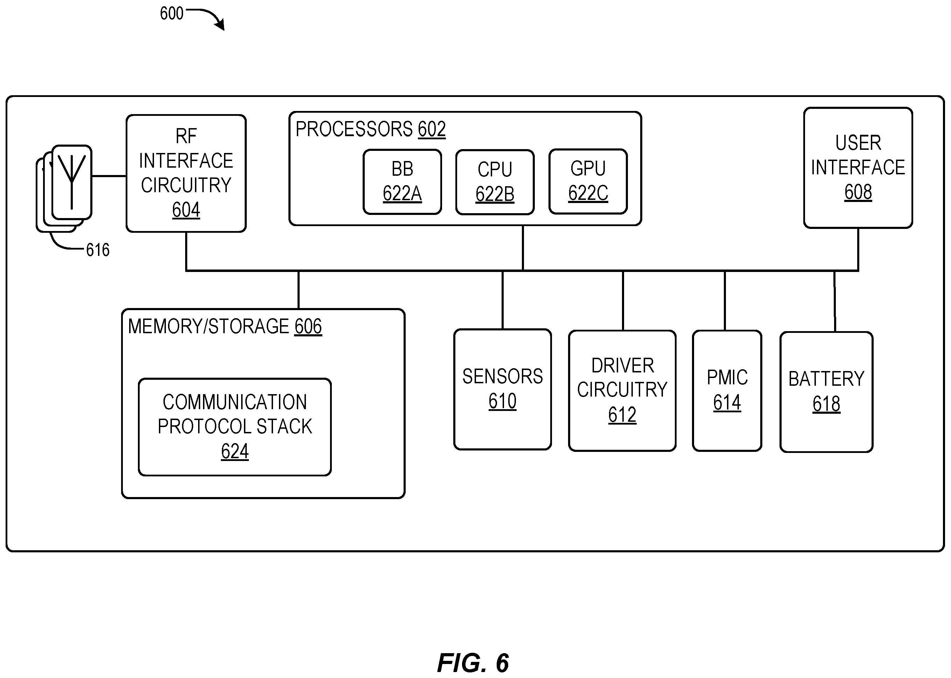

FIG. 6 illustrates an example UE 600, according to some implementations. The UE 600 may be similar to and/or substantially interchangeable with the UE 102 of FIG. 1. The UE 600 can be any mobile or non-mobile computing device, such as, for example, a mobile phone, computer, tablet, industrial wireless sensor, video device (for example, a camera or video camera), wearable device (for example, a smart watch), relaxed-IoT device, etc.

The UE 600 can include processor 602, RF interface circuitry 604, memory/storage 606, user interface 608, sensors 610, driver circuitry 612, power management integrated circuit (PMIC) 614, one or more antenna(s) 616, and/or battery 618. The components of the UE 600 can be implemented as integrated circuits (ICs), portions thereof, discrete electronic devices, or other modules, logic, hardware, software, firmware, or a combination thereof. The block diagram of FIG. 6 shows a high-level view of some of the components of the UE 600. However, some of the components shown can be omitted, additional components may be present, and a different arrangement of the components shown can be used in other implementations.

The components of the UE 600 may be coupled with various other components over one or more interconnects 620, which can represent any type of interface, input/output, bus (local, system, or expansion), transmission line, trace, optical connection, etc., that allows various circuit components (on common or different chips or chipsets) to interact with one another.

The processor 602 may include one or more processors. For example, the processor 602 may include processor circuitry such as, for example, baseband processor circuitry (BB) 622A, central processor unit circuitry (CPU) 622B, and graphics processor unit circuitry (GPU) 622C. The processor 602 may include any type of circuitry or processor circuitry that executes or otherwise operates computer-executable instructions, such as program code, software modules, or functional processes from memory/storage 606 to cause the UE 600 to perform operations described herein.

In some implementations, the baseband processor circuitry 622A may access a communication protocol stack 624 in the memory/storage 606 to communicate over a 3GPP compatible network. In general, the baseband processor circuitry 622A may access the communication protocol stack to: perform user plane functions at a physical (PHY) layer, medium access control (MAC) layer, radio link control (RLC) layer, packet data convergence protocol (PDCP) layer, service data adaptation protocol (SDAP) layer, and protocol data unit (PDU) layer; and perform control plane functions at a PHY layer, MAC layer, RLC layer, PDCP layer, RRC layer, and a non-access stratum (NAS) layer. In some implementations, the PHY layer operations may additionally/alternatively be performed by the components of the RF interface circuitry 604. The baseband processor circuitry 622A may generate or process baseband signals or waveforms that carry information in 3GPP-compatible networks. In some implementations, the waveforms for NR may be based cyclic prefix orthogonal frequency division multiplexing (CP-OFDM) in the uplink or downlink, and discrete Fourier transform spread OFDM (DFT-S-OFDM) in the uplink.

The memory/storage 606 may include one or more non-transitory, computer-readable media that includes instructions (for example, communication protocol stack 624) that can be executed by the processor 602 to cause the UE 600 to perform various operations described herein. The memory/storage 606 can include any type of volatile or non-volatile memory that may be distributed throughout the UE 600. In some implementations, the memory/storage 606 can be located on the processor 602 itself (for example, L1 and L2 cache), while other memory/storage 606 is external to the processor 602 but accessible thereto via a memory interface. The memory/storage 606 may include any suitable volatile or non-volatile memory such as, but not limited to, dynamic random access memory (DRAM), static random access memory (SRAM), erasable programmable read only memory (EPROM), electrically erasable programmable read only memory (EEPROM), Flash memory, solid-state memory, or any other type of memory device technology.

The RF interface circuitry 604 may include transceiver circuitry and radio frequency front module (RFEM) that allows the UE 600 to communicate with other devices over a radio access network. The RF interface circuitry 604 can include various elements arranged in transmit or receive paths. These elements may include, for example, switches, mixers, amplifiers, filters, synthesizer circuitry, control circuitry, etc.

In the receive path, the RFEM may receive a radiated signal from an air interface via antenna(s) 616 and proceed to filter and amplify (with a low-noise amplifier) the signal. The signal may be provided to a receiver of the transceiver that downconverts the RF signal into a baseband signal that is provided to the baseband processor.

In the transmit path, the transmitter of the transceiver up-converts the baseband signal received from the baseband processor and provides the RF signal to the RFEM. The RFEM may amplify the RF signal through a power amplifier prior to the signal being radiated across the air interface via the antenna(s) 616. In various implementations, the RF interface circuitry 604 may be configured to transmit/receive signals in a manner compatible with NR access technologies.

The antenna(s) 616 may include one or more antenna elements to convert electrical signals into radio waves to travel through the air and to convert received radio waves over the air into electrical signals. In some implementations, the antenna elements may be arranged into one or more antenna panels. The antenna(s) 616 may have antenna panels that are omnidirectional, directional, or a combination thereof, to enable beamforming and multiple input, multiple output communications. The antenna(s) 616 can include any/all of microstrip antennas, printed antennas fabricated on the surface of one or more printed circuit boards, patch antennas, phased array antennas, etc. The antenna(s) 616 may have one or more panels designed for one or more specific frequency bands, such as bands in FR1 or FR2.

The user interface 608 includes various input/output (I/O) devices designed to enable user interaction with the UE 600. The user interface 608 includes input device circuitry and output device circuitry. Input device circuitry includes any physical or virtual means for accepting an input including, inter alia, one or more physical or virtual buttons (for example, a reset button), a physical keyboard, keypad, mouse, touchpad, touchscreen, microphones, scanner, headset, or the like. The output device circuitry includes any physical or virtual means for showing information or otherwise conveying information, such as sensor readings, actuator position(s), or other like information. Output device circuitry may include any number or combinations of audio or visual display, including, inter alia, one or more simple visual outputs/indicators (for example, binary status indicators such as light emitting diodes "LEDs" and multi-character visual outputs), or more complex outputs such as display devices or touchscreens (for example, liquid crystal displays "LCDs," LED displays, quantum dot displays, projectors), with the output of characters, graphics, multimedia objects, and the like being generated or produced from the operation of the UE 600.

The sensors 610 may include devices, modules, or subsystems whose purpose is to detect events or changes in its environment and send the information (sensor data) about the detected events to some other device, module, subsystem, etc. Examples of such sensors include, inter alia, inertia measurement units including accelerometers, gyroscopes, or magnetometers; microelectromechanical systems or nanoelectromechanical systems including 3-axis accelerometers, 3-axis gyroscopes, or magnetometers; level sensors; temperature sensors (for example, thermistors); pressure sensors; image capture devices (for example, cameras or lensless apertures); light detection and ranging sensors; proximity sensors (for example, infrared radiation detector and the like); depth sensors; ambient light sensors; ultrasonic transceivers; microphones or other like audio capture devices; etc.

The driver circuitry 612 may include software and hardware elements that operate to control particular devices that are embedded in the UE 600, attached to the UE 600, or otherwise communicatively coupled with the UE 600. The driver circuitry 612 may include individual drivers allowing other components to interact with or control various input/output (I/O) devices that may be present within, or connected to, the UE 600. For example, driver circuitry 612 may include a display driver to control and allow access to a display device, a touchscreen driver to control and allow access to a touchscreen interface, sensor drivers to obtain sensor readings of sensors 610 and control and allow access to sensors 610, drivers to obtain actuator positions of electro-mechanic components or control and allow access to the electro-mechanic components, a camera driver to control and allow access to an embedded image capture device, audio drivers to control and allow access to one or more audio devices.

The PMIC 614 can manage power provided to various components of the UE 600. In particular, with respect to the processor 602, the PMIC 614 may control power-source selection, voltage scaling, battery charging, or DC-to-DC conversion.

In some implementations, the PMIC 614 may control, or otherwise be part of, various power saving mechanisms of the UE 600. A battery 618 may power the UE 600, although in some examples the UE 600 may be mounted deployed in a fixed location and may have a power supply coupled to an electrical grid. The battery 618 may be a lithium ion battery, a metal-air battery, such as a zinc-air battery, an aluminum-air battery, a lithium-air battery, and the like. In some implementations, such as in vehicle-based applications, the battery 618 may be a typical lead-acid automotive battery.

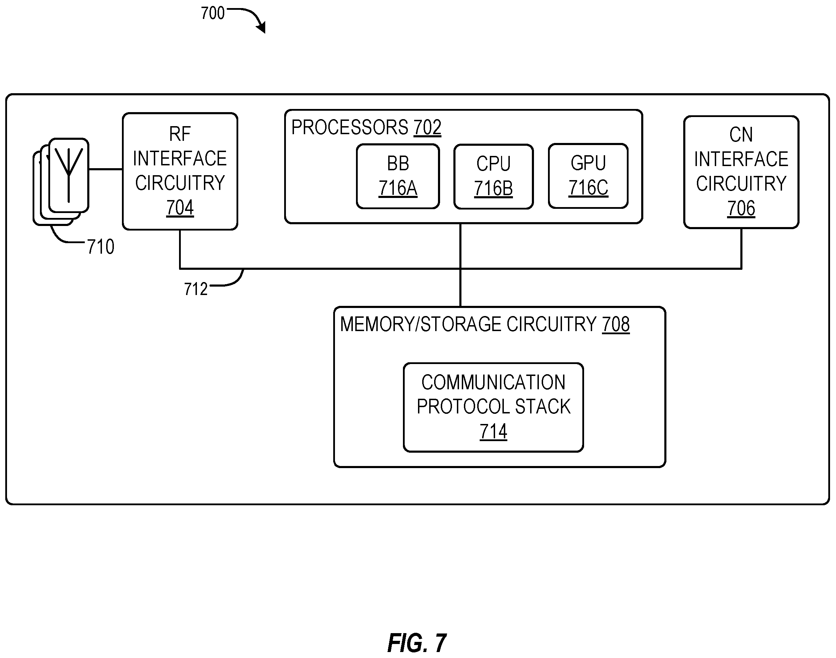

FIG. 7 illustrates an example access node 700, according to some implementations. The access node 700 (also referred to as a base station or gNB) may be similar to and/or substantially interchangeable with base station 104. The access node 700 can include one or more of processor 702, RF interface circuitry 704, core network (CN) interface circuitry 706, memory/storage circuitry 708, and one or more antenna(s) 710. The processor 702 may include any type of circuitry or processor circuitry that executes or otherwise operates computer-executable instructions, such as program code, software modules, or functional processes from memory/storage circuitry 708 to cause the access node 700 to perform operations as described herein.

The components of the access node 700 may be coupled with various other components over one or more interconnects 712. The processor 702, RF interface circuitry 704, memory/storage circuitry 708 (including communication protocol stack 714), antenna(s) 710, and interconnects 712 may be similar to like-named elements shown and described with respect to FIG. Y1. For example, the processor 702 may include processor circuitry such as, for example, baseband processor circuitry (BB) 716A, central processor unit circuitry (CPU) 716B, and graphics processor unit circuitry (GPU) 716C.

The CN interface circuitry 706 may provide connectivity to a core network, for example, a 5th Generation Core network (5GC) using a 5GC-compatible network interface protocol such as carrier Ethernet protocols, or some other suitable protocol. Network connectivity may be provided to/from the access node 700 via a fiber optic or wireless backhaul. The CN interface circuitry 706 may include one or more dedicated processors or FPGAs to communicate using one or more of the aforementioned protocols. In some implementations, the CN interface circuitry 706 may include multiple controllers to provide connectivity to other networks using the same or different protocols.

As used herein, the terms "access node," "access point," or the like refers to equipment that provides the radio baseband functions for data and/or voice connectivity between a network and one or more users. An access node may also be referred to as a base station (BS), gNB, RAN node, eNB, NodeB, roadside unit (RSU), transmission and reception point (TRP), TRxP, and so on. An access node can include ground stations (e.g., terrestrial access points) or satellite stations providing coverage within a geographic area (e.g., a cell). As used herein, the term "NG RAN node" or the like refers to an access node 700 that operates in an NR or 5G system (for example, a gNB), and the term "E-UTRAN node" or the like refers to an access node 700 that operates in an LTE or 4G system (e.g., an eNB). According to various implementations, the access node 700 can be implemented as one or more of a dedicated physical device, such as a macrocell base station, and/or a low power base station for providing femtocells, picocells or other cells with smaller coverage areas, smaller user capacity, or higher bandwidth (compared to macrocells).

In some implementations, the access node 700 can be implemented as one or more software entities running on server computers as part of a virtual network, which may be referred to as a cloud RAN (CRAN) and/or a virtual baseband unit pool (vBBUP). In vehicle-to-everything (V2X) scenarios, the access node 700 may be or act as an RSU, which refers to any transportation infrastructure entity used for V2X communications. An RSU can be implemented in or by a suitable RAN node or a stationary (or relatively stationary) UE, where an RSU implemented in or by a UE is referred to as a "UE-type RSU," an RSU implemented in or by an eNB is referred to as an "eNB-type RSU," an RSU implemented in or by a gNB is referred to as a "gNB-type RSU," and so forth.

In the preceding description, various components are described as performing a task or tasks. Such descriptions should be interpreted as including the phrase "configured to." Reciting a component that is configured to perform one or more tasks is expressly intended not to invoke 35 U.S.C. § 112(f) interpretation for that component.

In some embodiments, one or more of the components described in the preceding figures may be configured to perform one or more operations, techniques, processes, or methods set forth in the examples section below. For example, the baseband circuitry described in connection with one or more of the preceding figures may be configured to operate in accordance with one or more of the examples set forth below. For another example, circuitry associated with a UE, access node, base station, or network element may be configured to operate in accordance with one or more of the examples set forth below.

Example 1 is a method including: receiving control signaling that configures one or more parameters for UCI reporting on PUSCH resources; determining a mapping between at least one downlink CC and at least one uplink CC according to the one or more parameters configured for UCI reporting on PUSCH resources; and transmitting UCI via one or more PUSCH resources associated with the at least one uplink CC based on the determined mapping.

Example 2 includes the method of example 1, where the UCI includes at least one of a P-CSI report, an A-CSI report, an event-triggered CSI report, HARQ ACK feedback, or a SR.

Example 3 includes the method of example 2, where the control signaling configures event-triggered CSI reporting on the one or more PUSCH resources.

Example 4 includes the method of any of examples 1-3, further including transmitting capability signaling that indicates at least one of (i) a number of uplink CCs that can be active per slot for P-CSI reporting on PUSCH resources, (ii) a maximum number of active uplink CCs with P-CSI reporting on PUSCH resources, or (iii) a number of downlink CCs that can be measured and reported on a single uplink CC.

Example 5 includes the method of example 4, where the capability signaling indicates that more than one downlink CC can be measured and reported on a single uplink CC.

Example 6 includes the method of any of examples 1-5, where the control signaling configures a set of *CSI-ReportConfigId* values, each value associated with a different downlink CC.

Example 7 includes the method of example 6, where each *CSI-ReportConfigId* value is associated with at most one active periodic CSI report.

Example 8 includes the method of any of examples 1-7, where the control signaling indicates a CG PUSCH resource to use for P-CSI reporting.

Example 9 includes the method of example 8, where an identifier or configuration of the CG PUSCH resource is provided by at least one of a *CSI-MeasConfig* field of a *ServingCellConfig* IE, a *CSI-ReportConfig* subfield within the *CSI-MeasConfig* field, or an *uplinkConfig* field within the *ServingCellConfig* IE.

Example 10 includes the method of any of examples 1-9, where the one or more parameters include a list of CG PUSCH identifiers or configurations for P-CSI reporting configured per serving cell.

Example 11 includes the method of example 10, where a respective list of CG PUSCH identifiers or configurations is provided for each uplink BWP.

Example 12 includes the method of any of examples 1-11, where a single CG PUSCH resource is configured per serving cell for a particular uplink BWP, and where the CG PUSCH resource is activated when the particular uplink BWP is active.

Example 13 includes the method of any of examples 1-12, further including multiplexing accumulated HARQ-ACK bits on the one or more PUSCH resources in accordance with the control signaling.

Example 14 includes the method of example 13, where the control signaling includes DCI or RRC signaling.

Example 15 includes the method of any of examples 13-14, where the accumulated HARQ-ACK bits are multiplexed with uplink data.

Example 16 includes the method of any of examples 1-15, where determining the mapping includes receiving, via the control signaling, a mapping between one downlink CC and one uplink CC, a mapping between more than one downlink CC and one uplink CC, a mapping between one downlink CC and more than one uplink CC, or a mapping between more than one downlink CC and more than one uplink CC.

Example 17 includes the method of example 16, where HARQ-ACK feedback is not reported for a PDSCH on a downlink CC that is mapped to more than one uplink CC.

Example 18 includes the method of any of examples 16-17, where HARQ-ACK feedback is reported for a PDSCH scheduled on a downlink CC that is mapped to more than one uplink CC.

Example 19 includes the method of any of examples 16-18, where the control signaling includes an RRC message, a MAC-CE, or DCI that indicates an association between downlink CCs and uplink CCs.

Example 20 includes the method of example 19, where a field in the DCI indicates that a PUSCH transmission carries HARQ-ACK feedback for one or more of the uplink CCs.

Example 21 includes the method of example 20, where the DCI schedules the PUSCH transmission with or without uplink data.

Example 22 includes the method of any of examples 20-21, where the DCI schedules a PDSCH transmission on a downlink CC.

Example 23 includes the method of example 22, where the PUSCH transmission is scheduled on an uplink CC associated with the downlink CC on which the PDSCH transmission is received.

Example 24 includes the method of any of examples 20-23, where the control signaling configures one or more PUSCH resources for UCI transmission without uplink data.

Example 25 includes the method of any of examples 20-24, further including: in response to determining that a flag in the DCI is set to one, multiplexing HARQ-ACK bits for all downlink HARQ processes on downlink CCs mapped to the uplink CCs on which the PUSCH transmission is scheduled.

Example 26 includes the method of any of examples 20-25, where the DCI includes a DAI and a K1 offset value indicating a number of bits to be reported in an uplink slot.

Example 27 includes the method of example 26, where the DAI is incremented across all downlink CCs corresponding to the uplink CCs on which the PUSCH transmission is scheduled.

Example 28 includes the method of any of examples 20-27, where the DCI indicates a PUSCH resource to use for transmission of HARQ-ACK feedback for a PDSCH transmission, and where the indicated PUSCH resource does not carry uplink data.

Example 29 includes the method of any of examples 1-28, where the control signaling configures one or more PUSCH resources per uplink CC to carry SRs without uplink data.

Example 30 includes the method of example 29, where the one or more PUSCH resources do not overlap with PUSCH resources that carry uplink data across any uplink CC.

Example 31 includes the method of any of examples 29-30, further including multiplexing HARQ-ACK feedback with an SR on a common PUSCH resource when both the SR and the HARQ-ACK feedback are scheduled on the same uplink CC.

Example 32 includes the method of any of examples 1-31, further including configuring a cell-specific PUSCH resource per uplink CC to carry HARQ-ACK feedback for Msg4, where the cell-specific PUSCH resource is released when one or more UE-specific PUSCH resources are configured.

Example 33 includes the method of example 32, where the cell-specific PUSCH resource does not overlap with the one or more UE-specific PUSCH resources.

Example 34 includes the method of any of examples 1-33, further including: identifying an overlap between multiple PUSCH transmissions scheduled on an uplink CC; and resolving the overlap by prioritizing DG PUSCH transmissions over CG PUSCH transmissions and prioritizing CG PUSCH transmissions over P-CSI reports.

Example 35 includes the method of any of examples 1-34, where PUSCH resources that are configured for UCI transmission on a particular uplink CC do not overlap with PUSCH resources carrying data scheduled by DCI.

Example 36 includes the method of any of examples 1-35, where one PUSCH transmission carrying CSI is allowed across all uplink CCs.

Example 37 includes the method of any of examples 1-36, where A-CSI reports with data are prioritized over A-CSI reports without data, and where A-CSI reports with or without data are prioritized over P-CSI reports, and where CSI transmissions associated with lower serving cell indexes are prioritized over CSI reports with higher serving cell indexes.

Example 38 includes the method of any of examples 1-37, further including concurrently transmitting overlapping PUSCH transmissions across different uplink CCs without multiplexing the UCI across the uplink CCs.

Example 39 includes the method of any of examples 1-38, further including determining a priority of a PUSCH resource based on at least one of (i) a priority of uplink data carried by the PUSCH resource or (ii) a priority of HARQ-ACK feedback carried by the PUSCH resource, where the priority of the HARQ-ACK feedback corresponds to the priority of the uplink data.

Example 40 includes the method of example 39, further including dropping a PUSCH transmission with a lower priority when a sum of transmit powers across multiple serving cells exceeds a threshold.

Example 41 includes the method of any of examples 1-40, further including performing measurements of one or more resources in accordance with an event-driven CSI reporting configuration, where the one or more resources include a periodic or semi-persistent CSI-RS resource or SSB.

Example 42 includes the method of any of examples 1-41, where the control signaling configures a timer and one or more thresholds for triggering event-driven CSI reports.

Example 43 includes the method of example 42, where the timer is reset after transmission of an event-driven CSI report.

Example 44 includes the method of any of examples 42-43, further including transmitting a triggered event-driven CSI report in a MAC-CE that indicates which CSI quantities are included in the CSI report.

Example 45 includes the method of any of examples 42-44, where separate MAC-CE formats are configured for each CSI report quantity.

Example 46 includes the method of any of examples 1-45, where receiving the control signaling that configures the one or more parameters for UCI reporting on PUSCH resources includes receiving a network indication of the one or more parameters to use for overlap resolution and resource selection.

Example 47 includes the method of example 46, where the control signaling further indicates a set of UCI types among overlapping channels that are expected to be multiplexed on the one or more PUSCH resources selected for transmission of the UCI.

Example 48 is an apparatus including: one or more processors; and memory storing instructions that, when executed by the one or more processors, cause the apparatus to perform the method of any of examples 1-47.

Example 49 is a baseband processor configured to perform the method of any of examples 1-47.

Example 50 is a method including: transmitting control signaling that configures one or more parameters for UCI reporting on PUSCH resources; determining a mapping between at least one downlink CC and at least one uplink CC according to the one or more parameters configured for UCI reporting on PUSCH resources; and receiving UCI via one or more PUSCH resources associated with the at least one uplink CC based on the determined mapping.

Example 51 includes the method of example 50, where the UCI includes at least one of a P-CSI report, an A-CSI report, an event-triggered CSI report, HARQ-ACK feedback, or a SR.

Example 52 includes the method of example 51, where the control signaling configures event-triggered CSI reporting on the one or more PUSCH resources.

Example 53 includes the method of any of examples 50-52, further including receiving capability signaling that indicates at least one of (i) a number of uplink CCs that can be active per slot for P-CSI reporting on PUSCH resources, (ii) a maximum number of active uplink CCs with P-CSI reporting on PUSCH resources, or (iii) a number of downlink CCs that can be measured and reported on a single uplink CC.

Example 54 includes the method of example 53, where the capability signaling indicates that more than one downlink CC can be measured and reported on a single uplink CC.

Example 55 includes the method of any of examples 50-54, where the control signaling configures a set of *CSI-ReportConfigId* values, each value associated with a different downlink CC.

Example 56 includes the method of example 55, where each *CSI-ReportConfigId* value is associated with at most one active periodic CSI report.

Example 57 includes the method of any of examples 50-56, where the control signaling indicates a CG PUSCH resource to use for P-CSI reporting.

Example 58 includes the method of example 57, where an identifier or configuration of the CG PUSCH resource is provided by at least one of a *CSI-MeasConfig* field of a *ServingCellConfig* IE, a *CSI-ReportConfig* subfield within the *CSI-MeasConfig* field, or an *uplinkConfig* field within the *ServingCellConfig* IE.

Example 59 includes the method of any of examples 50-58, where the one or more parameters include a list of CG PUSCH identifiers or configurations for P-CSI reporting configured per serving cell.

Example 60 includes the method of example 59, where a respective list of CG PUSCH identifiers or configurations is provided for each uplink BWP.

Example 61 includes the method of any of examples 50-60, where a single CG PUSCH resource is configured per serving cell for a particular uplink BWP, and where the CG PUSCH resource is activated when the particular uplink BWP is active.

Example 62 includes the method of any of examples 50-61, further including receiving accumulated HARQ-ACK bits multiplexed on the one or more PUSCH resources in accordance with the control signaling.

Example 63 includes the method of example 62, where the control signaling includes DCI or RRC signaling.

Example 64 includes the method of any of examples 62-63, where the accumulated HARQ-ACK bits are multiplexed with uplink data.

Example 65 includes the method of any of examples 50-64, where determining the mapping includes receiving, via the control signaling, a mapping between one downlink CC and one uplink CC, a mapping between more than one downlink CC and one uplink CC, a mapping between one downlink CC and more than one uplink CC, or a mapping between more than one downlink CC and more than one uplink CC.

Example 66 includes the method of example 65, where HARQ-ACK feedback is not reported for a PDSCH on a downlink CC that is mapped to more than one uplink CC.

Example 67 includes the method of any of examples 65-66, where HARQ-ACK feedback is reported for a PDSCH scheduled on a downlink CC that is mapped to more than one uplink CC.

Example 68 includes the method of any of examples 65-67, where the control signaling includes an RRC message, a MAC-CE, or DCI that indicates an association between downlink CCs and uplink CCs.

Example 69 includes the method of example 68, where a field in the DCI indicates that a PUSCH transmission carries HARQ-ACK feedback for one or more of the uplink CCs.

Example 70 includes the method of example 69, where the DCI schedules the PUSCH transmission with or without uplink data.

Example 71 includes the method of any of examples 69-70, where the DCI schedules a PDSCH transmission on a downlink CC.

Example 72 includes the method of example 71, where the PUSCH transmission is scheduled on an uplink CC associated with the downlink CC on which the PDSCH transmission is received.

Example 73 includes the method of any of examples 69-72, where the control signaling configures one or more PUSCH resources for UCI transmission without uplink data.

Example 74 includes the method of any of examples 69-73, where the DCI includes a DAI and a K1 offset value indicating a number of bits to be reported in an uplink slot.

Example 75 includes the method of example 74, where the DAI is incremented across all downlink CCs corresponding to the uplink CCs on which the PUSCH transmission is scheduled.

Example 76 includes the method of any of examples 69-75, where the DCI indicates a PUSCH resource to use for transmission of HARQ-ACK feedback for a PDSCH transmission, and where the indicated PUSCH resource does not carry uplink data.

Example 77 includes the method of any of examples 50-76, where the control signaling configures one or more PUSCH resources per uplink CC to carry SRs without uplink data.

Example 78 includes the method of example 77, where the one or more PUSCH resources do not overlap with PUSCH resources that carry uplink data across any uplink CC.

Example 79 includes the method of any of examples 50-78, further including configuring a cell-specific PUSCH resource per uplink CC to carry HARQ-ACK feedback for Msg4, where the cell-specific PUSCH resource is released when one or more UE-specific PUSCH resources are configured.

Example 80 includes the method of example 79, where the cell-specific PUSCH resource does not overlap with the one or more UE-specific PUSCH resources.

Example 81 includes the method of any of examples 50-80, where PUSCH resources that are configured for UCI transmission on a particular uplink CC do not overlap with PUSCH resources carrying data scheduled by DCI.

Example 82 includes the method of any of examples 50-81, where one PUSCH transmission carrying CSI is allowed across all uplink CCs.

Example 83 includes the method of any of examples 50-82, where A-CSI reports with data are prioritized over A-CSI reports without data, and where A-CSI reports with or without data are prioritized over P-CSI reports, and where CSI transmissions associated with lower serving cell indexes are prioritized over CSI reports with higher serving cell indexes.

Example 84 includes the method of any of examples 50-83, further including concurrently receiving overlapping PUSCH transmissions across different uplink CCs, where the UCI is not multiplexed across the uplink CCs.

Example 85 includes the method of any of examples 50-84, further including determining a priority of a PUSCH resource based on at least one of (i) a priority of uplink data carried by the PUSCH resource or (ii) a priority of HARQ-ACK feedback carried by the PUSCH resource, where the priority of the HARQ-ACK feedback corresponds to the priority of the uplink data.

Example 86 includes the method of any of examples 50-85, where the control signaling configures a timer and one or more thresholds for triggering event-driven CSI reports.

Example 87 includes the method of example 86, where the timer is reset after transmission of an event-driven CSI report.

Example 88 includes the method of any of examples 86-87, further including receiving a triggered event-driven CSI report in a MAC-CE that indicates which CSI quantities are included in the CSI report.

Example 89 includes the method of any of examples 86-88, where separate MAC-CE formats are configured for each CSI report quantity.

Example 90 includes the method of any of examples 50-89, where transmitting the control signaling that configures the one or more parameters for UCI reporting on PUSCH resources includes transmitting a network indication of the one or more parameters to use for overlap resolution and resource selection.

Example 91 includes the method of example 90, where the control signaling further indicates a set of UCI types among overlapping channels that are expected to be multiplexed on the one or more PUSCH resources selected for transmission of the UCI.

Example 92 is an apparatus including: one or more processors; and memory storing instructions that, when executed by the one or more processors, cause the apparatus to perform the method of any of examples 50-91.

Example 93 is a baseband processor configured to perform the method of any of examples 50-91.

Any of the examples described above may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Although the embodiments above have been described in considerable detail, numerous variations and modifications will become apparent to those skilled in the art once the above disclosure is fully appreciated. It is intended that the following claims be interpreted to embrace all such variations and modifications.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

## Claims

1. A method comprising:
receiving control signaling that configures one or more parameters for uplink control information (UCI) reporting on physical uplink shared channel (PUSCH) resources;
determining a mapping between at least one downlink component carrier (CC) and at least one uplink CC according to the one or more parameters configured for UCI reporting on PUSCH resources; and
transmitting an UCI via one or more PUSCH resources associated with the at least one uplink CC based at least on the determined mapping.

2. The method of claim 1, wherein the UCI comprises at least one of a periodic channel state information (P-CSI) report, an aperiodic channel state information (A-CSI) report, an event-triggered CSI report, hybrid automatic repeat request (HARQ) acknowledgement (ACK) feedback, or a scheduling request (SR), and wherein the control signaling configures event-triggered CSI reporting on the one or more PUSCH resources.

3. The method of any of claims 1-2,
further comprising transmitting capability signaling that indicates at least one of (i) a number of uplink CCs that can be active per slot for P-CSI reporting on PUSCH resources, (ii) a maximum number of active uplink CCs with P-CSI reporting on PUSCH resources, or (iii) a number of downlink CCs that can be measured and reported on a single uplink CC wherein the capability signaling indicates that more than one downlink CC can be measured and reported on a single uplink CC, and/or
wherein the control signaling configures a plurality of *CSI-ReportConfigId* values, each value associated with a different downlink CC, and wherein each *CSI-ReportConfigId* value is associated with at most one active periodic CSI report, and wherein the control signaling indicates a configured grant (CG) PUSCH resource to use for P-CSI reporting, and wherein an identifier or configuration of the CG PUSCH resource is provided by at least one of a *CSI-MeasConfig* field of a *ServingCellConfig* IE, a *CSI-ReportConfig* subfield within the *CSI-MeasConfig* field, or an *uplinkConfig* field within the *ServingCellConfig* IE.

4. The method of any of claims 1-3,
wherein the one or more parameters comprise a list of CG PUSCH identifiers or configurations for P-CSI reporting configured per serving cell, wherein a respective list of CG PUSCH identifiers or configurations is provided for each uplink bandwidth part (BWP), and wherein a single CG PUSCH resource is configured per serving cell for a particular uplink BWP, and wherein the CG PUSCH resource is activated when the particular uplink BWP is active, and/or.
further comprising multiplexing accumulated HARQ-ACK bits on the one or more PUSCH resources in accordance with the control signaling, wherein the accumulated HARQ-ACK bits are multiplexed with uplink data.

5. The method of any of claims 1-4, wherein determining the mapping comprises receiving, via the control signaling, a mapping between one downlink CC and one uplink CC, a mapping between more than one downlink CC and one uplink CC, a mapping between one downlink CC and more than one uplink CC, or a mapping between more than one downlink CC and more than one uplink CC.

6. The method of claim 5,
wherein the control signaling comprises a DCI that (i) indicates an association between downlink CCs and uplink CCs and (ii) schedules a PDSCH transmission on a downlink CC, and
wherein a field in the DCI indicates that a PUSCH transmission carries HARQ-ACK feedback for one or more of the uplink CCs, and wherein the PUSCH transmission is scheduled on an uplink CC associated with the downlink CC on which the PDSCH transmission is received,
optionally wherein the DCI comprises a downlink assignment indicator (DAI) and a K1 offset value indicating a number of bits to be reported in an uplink slot, wherein the DAI is incremented across all downlink CCs corresponding to the uplink CCs on which the PUSCH transmission is scheduled.

7. The method of any of claims 1-6, further comprising:
determining a priority of a PUSCH resource based on at least one of (i) a priority of uplink data carried by the PUSCH resource or (ii) a priority of HARQ-ACK feedback carried by the PUSCH resource, wherein the priority of the HARQ-ACK feedback corresponds to the priority of the uplink data; and
dropping a PUSCH transmission with a lower priority when a sum of transmit powers across multiple serving cells exceeds a threshold.

8. The method of any of claims 1-7,
wherein the control signaling configures a timer and one or more thresholds for triggering event-driven CSI reports, wherein the timer is reset after transmission of an event-driven CSI report, and/or
wherein receiving the control signaling that configures the one or more parameters for UCI reporting on PUSCH resources comprises receiving a network indication of the one or more parameters to use for overlap resolution and resource selection, and wherein the control signaling further indicates a set of UCI types among overlapping channels that are expected to be multiplexed on the one or more PUSCH resources selected for transmission of the UCI.

9. A method comprising:
transmitting control signaling that configures one or more parameters for UCI reporting on PUSCH resources;
determining a mapping between at least one downlink CC and at least one uplink CC according to the one or more parameters configured for UCI reporting on PUSCH resources; and
receiving UCI via one or more PUSCH resources associated with the at least one uplink CC based at least on the determined mapping.

10. The method of claim 9, wherein the UCI comprises at least one of a P-CSI report, an A-CSI report, an event-triggered CSI report, HARQ-ACK feedback, or a scheduling request (SR), and
wherein the control signaling configures event-triggered CSI reporting on the one or more PUSCH resources.

11. The method of any of claims 9-10,
further comprising receiving capability signaling that indicates at least one of (i) a number of uplink CCs that can be active per slot for P-CSI reporting on PUSCH resources, (ii) a maximum number of active uplink CCs with P-CSI reporting on PUSCH resources, or (iii) a number of downlink CCs that can be measured and reported on a single uplink CC, wherein the capability signaling indicates that more than one downlink CC can be measured and reported on a single uplink CC, and/or
wherein the control signaling configures a plurality of *CSI-ReportConfigId* values, each value associated with a different downlink CC, wherein each *CSI-ReportConfigId* value is associated with at most one active periodic CSI report.

12. The method of any of claims 9-11,
wherein the control signaling indicates a CG PUSCH resource to use for P-CSI reporting, wherein an identifier or configuration of the CG PUSCH resource is provided by at least one of a *CSI-MeasConfig* field of a *ServingCellConfig* IE, a *CSI-ReportConfig* subfield within the *CSI-MeasConfig* field, or an *uplinkConfig* field within the *ServingCellConfig* IE, and/or
wherein the one or more parameters comprise a list of CG PUSCH identifiers or configurations for P-CSI reporting configured per serving cell, wherein a respective list of CG PUSCH identifiers or configurations is provided for each uplink BWP, and wherein a single CG PUSCH resource is configured per serving cell for a particular uplink BWP, and wherein the CG PUSCH resource is activated when the particular uplink BWP is active.

13. The method of any of claims 9-12, wherein the control signaling comprises a DCI that indicates an association between downlink CCs and uplink CCs and a field in the DCI indicates that a PUSCH transmission carries HARQ-ACK feedback for one or more of the uplink CCs, and
wherein the DCI comprises a DAI and a K1 offset value indicating a number of bits to be reported in an uplink slot, the DAI being incremented across all downlink CCs corresponding to the uplink CCs on which the PUSCH transmission is scheduled.

14. An apparatus comprising:
one or more processors; and
memory storing instructions that, when executed by the one or more processors, cause the apparatus to perform the method of any of claims 1-13.

15. One or more computer-readable media storing instructions that, when executed, are configured to cause one or more processors to perform the method of any of claims 1-13.
